# EUROPEAN PATENT APPLICATION

(11) **EP 3 932 201 A1**
(43) Date of publication of application: **05.01.2022**
(21) Application number: 21183394.2
(22) Date of filing: 02.07.2021
(51) Int. Cl.: A01N 25/04, A01N 25/12, A01N 59/16, A01N 65/08, A01N 65/22, A01P 1/00, A01N 25/28, A01N 37/02

(54) **ANTIMICROBIAL PREPARATION BASED ON IRON AND PLANT EXTRACT, METHOD OF ITS PREPARATION AND APPLICATION**

(30) Priority: 03.07.2020 PL 43456020
(71) Applicant: Uniwersytet Ekonomiczny W Poznaniu, 61-875 Poznan (PL)
(72) Inventor: Ligaj, Marta, 62-090 Kiekrz (PL); Wojciechowska, Patrycja, 62-002 Zlotkowo (PL)
(74) Representative: AOMB Polska Sp. z.o.o.

(57) **Abstract**

The invention relates to a preparation having antimicrobial activity based on iron and a plant extract, a method for preparing thereof and application for inhibiting growth of pathogenic and undesirable microflora.

## Description

The invention relates to a preparation having antimicrobial activity, based on iron and a plant extract, a method for preparing thereof and use for inhibiting growth of pathogenic and undesirable microflora.

In recent years, preparations based on iron, obtained by reducing cations from its salts, have become increasingly popular. Such preparations exhibit a high capacity to degrade or bind non-biodegradable contaminants such as halogenated organic compounds, heavy metals, arsenic and nitrates and other inorganic contaminants and can be used in water treatment and remediation processes (Eglal and Ramamurthy, 2014; Litter et al., 2018). Particles containing zero-oxidation degree iron (Fe(0)), prepared by reduction of iron cations from its salt with sodium borohydride, are the most efficient in terms of removal of contaminants (Wang and Zhang, 1997). Due to the fact that this reagent is toxic, more environmentally friendly methods for the synthesis of active iron particles are being sought (e.g. Crane and Scott, 2012), e.g. those using plant extracts.

In literature, active iron preparations obtained with plant extracts are known, including but not limited to: green tea (*Camellia sinensis*)*,* coffee and wine (Oakes, 2013), yerba mate (Garcia et al. 2019), in which main compounds with iron salt reducing properties are polyphenols (Anesini et al., 2008). Hoag et al. (2009) published first methodology for synthesis of active iron particles prepared using green tea extract and Fe(NO₃)₃. In subsequent years, similar procedures using a variety of natural plant materials and other Fe salts, such as: FeCl₂, FeCl₃, FeSO₄, have been published (Genuino et al., 2013; Kharissova et al., 2013; Herlekar et al., 2014). The iron preparations obtained are characterised by varied composition and chemical structure (Eglal and Ramamurthy, 2014), and they also exhibit antimicrobial activity. In the literature, the antimicrobial activity of particles synthesised using FeSO₄ and extracts from *Lawsonia inermis* (henna) and *Gardenia jasminoides* (jasmine gardenia) against *Escherichia coli, Salmonella enterica, Proteus mirabilis* and *Staphylococcus aureus* have been reported (Naseem and Farrukh, 2015).

The aim of the invention was to develop a synthesis method and to obtain an antimicrobial iron preparation with use of plant extracts such as oregano leaves, yerba mate or olive leaves extract or mixtures thereof, preferably in a weight ratio of 2:2:1, respectively, wherein the antimicrobial iron preparation should be characterised by a stabilised durability, i.e. a reduced oxidation of an active iron form.

A method of preparation of an antimicrobial preparation based on iron and a plant extract according to the invention is that a dried plant is mixed with water or an aqueous solution, wherein weight ratio of dried plant:water equals from 1:5 to 1:30, preferably from 1:10 to 1:20, after which the mixture is shaken at a temperature between 20 °C and 100 °C, preferably between 40 °C and 100 °C, more preferably between 60 °C and 90 °C for at least 10 min., preferably for at least 30 min., most preferably for at least 1 h, to obtain an aqueous extract of the dried plant, the obtained aqueous extract of the dried plant is then separated from solid residue of the dried plant and a solution of Fe(II) or Fe(III) iron salts or a mixture of Fe(II) and Fe(III) iron salts in a concentration between 0,01 and 2 M, preferably between 0,05 and 1 M, is added to the aqueous extract of dried plant with stirring, wherein volume ratio of salt solution : aqueous extract of dried plant is between 1:1 and 1:10, preferably between 1:2 and 1:5, the pH is then adjusted to between 5.0 and 6.5 until precipitation of a precipitate containing active iron particles is achieved, after which the obtained suspension of the active iron particles is stabilised by the addition of 0.001-5% (w/v), preferably 0.005-0.5% (w/v) α-lipoic acid relative to the volume of the suspension.

The aqueous extract of the dried plant may be obtained by mixing the dried plant with water at a temperature of 20°C to 100°C for at least 10 minutes, wherein the higher the temperature and the longer the mixing time, the more concentrated the aqueous extract is obtained. However, the use of high temperatures, above 100 °C, and long mixing times involves high energy expenditure, which will consequently become less economical and environmentally friendly. In case of obtaining a more concentrated aqueous extract of dried plant, it is recommended to add a solution of Fe(II) or Fe(III) iron salt at a higher concentration from the range of 0.01 to 2 M. In this case, preferably, after precipitation, the suspension is stabilised by the addition of α-lipoic acid at a higher concentration from the range of 0.001-5% (w/v).

Preferably, the suspension, once stabilised, is dried to obtain a precipitate containing active iron particles. Preferably, the suspension, once stabilised, is dried by lyophilisation. The precipitate obtained as a result of drying, that contains the active iron particles, may be suspended in water or an aqueous solution.

Preferably, the dried plant contains oregano leaves and/or yerba mate, and/or olive leaves. Optionally, the dried plant contains oregano leaves and yerba mate and olive leaves in a weight ratio of 2:2:1, respectively.

Preferably, the dried plant is mixed with water in a dried plant:water ratio of 1:16 by weight.

The mixture of dried plant and water may be shaken for 1,5 h at 80°C. To the aqueous extract of dried plant, 0.033 mole of FeCl₃·6H₂O and/or FeCl₂·4H₂O per dm³ of extract may be added.

Preferably, a 0.01% (w/v) addition of α-lipoic acid relative to the volume of the suspension is used to stabilise the suspension.

An antimicrobial preparation based on iron and a plant extract according to the invention is obtained according to the method for preparing the antimicrobial preparation based on iron and plant extract described above.

Use of the antimicrobial preparation based on iron and plant extract according to the invention consists in inhibiting growth of pathogenic and undesirable microflora. Preferably, the preparation based on iron and a plant extract is used to inhibit growth of *Salmonella* sp. and/or *Escherichia coli,* and/or *Listeria* sp. The use of the addition of 0.001-5% (w/v), preferably 0.005-0.5% (w/v), α-lipoic acid reduces oxidation of the active iron form in the preparation, resulting in a high durability of the preparation. An advantage of the preparations constituting the object of the invention, as opposed to similar solutions known in the literature, is their selective antimicrobial activity consisting in inhibiting growth of pathogenic and undesirable microflora, e.g. *Salmonella* sp., *Escherichia coli, Listeria* sp., while not affecting growth of desired bacterial microflora from the genus Lactobacillus sp., present e.g. in fermented milk products. The antimicrobial preparation according to the invention is applicable in packaging materials for packaging food products.

The invention is presented in non-limiting embodiments.

### Embodiment 1

Plant extract was prepared by suspending 25 g of dried oregano leaves in 400 ml of deionised water and shaking at 400 rpm for 1.5 h at 80°C. The extract obtained was then filtered under pressure on a Buchner funnel using a soft filter paper. In a separate vessel, a fresh solution of 0.1 M FeCl₂·4H₂O was prepared, which was added to the extract in a volume ratio of 1:3 (0.1 M FeCl₂·4H₂O:oregano extract), while continuously stirring the contents of the reaction beakers on a magnetic stirrer (at 600 rpm). 0.75 M NaOH was added to the obtained solution to raise pH to a level between 5.0 and 6.5 (the pH was measured with an indicator paper) until a precipitate was obtained. Then, 0.01% (w/v) of α-lipoic acid was added to the suspension. The obtained suspension of active iron particles was lyophilised to obtain a dry preparation which was stored in a sealed glass container.

### Embodiment 2

Plant extract was prepared by suspending 25 g of dried oregano leaves in 400 ml of deionised water and shaking at 400 rpm for 1.5 h at 80°C. The extract obtained was then filtered under pressure on a Buchner funnel using a soft filter paper. In a separate vessel, a fresh solution of 0.1 M FeCl₃·6H₂O was prepared, which was added to the extract in a volume ratio of 1:3 (solution of 0.1 M FeCl₃·6H₂O:oregano extract), while continuously stirring the contents of the reaction beakers on a magnetic stirrer (at 600 rpm). 0.75 M NaOH was added to the obtained solution, to raise pH to a level between 5.0 and 6.5 (the pH was measured with an indicator paper) until a precipitate was obtained. Then, 0.01% (w/v) of α-lipoic acid was added to the suspension. The obtained suspension of active iron particles was lyophilised to obtain a dry preparation which was stored in a sealed glass container.

### Embodiment 3

Plant extract was prepared by suspending 25 g of dried yerba mate in 400 ml of deionised water and shaking at 400 rpm for 1.5 h at 80°C. The extract obtained was then filtered under pressure on a Buchner funnel using a soft filter paper. In a separate vessel, a fresh solution of 0.1 M FeCl₂·4H₂O was prepared, which was added to the extract in a volume ratio of 1:3 (0.1 M FeCl₂·4H₂O:yerba mate extract), while continuously stirring the contents of the reaction beakers on a magnetic stirrer (at 600 rpm). 0.75 M NaOH was added to the obtained solution, to raise the pH to a level between 5.0 and 6.5 (the pH was measured with an indicator paper) until a precipitate was obtained. Then, 0.01% (w/v) of α-lipoic acid was added to the suspension. The obtained suspension of active iron particles was lyophilised to obtain a dry preparation which was stored in a sealed glass container.

### Embodiment 4

Plant extract was prepared by suspending 25 g of dried yerba mate in 400 ml of deionised water and shaking at 400 rpm for 1.5 h at 80°C. The extract obtained was then filtered under pressure on a Buchner funnel using a soft filter paper. In a separate vessel, a fresh solution of 0.1 M FeCl₃·6H₂O was prepared, which was added to the extract in a volume ratio of 1:3 (solution of 0.1 M FeCl₃·6H₂O:yerba mate extract), while continuously stirring the contents of the reaction beakers on a magnetic stirrer (at 600 rpm). 0.75 M NaOH was added to the obtained solution, to raise the pH to a level between 5.0 and 6.5 (the pH was measured with an indicator paper) until a precipitate was obtained. Then, 0.01% (w/v) of α-lipoic acid was added to the suspension. The obtained suspension of active iron particles was lyophilised to obtain a dry preparation which was stored in a sealed glass container.

### Embodiment 5

Plant extract was prepared by suspending 25 g of dried olive leaves in 400 ml of deionised water and shaking at 400 rpm for 1.5 h at 80°C. The extract obtained was then filtered under pressure on a Buchner funnel using a soft filter paper. In a separate vessel, a fresh solution of 0.1 M FeCl₂·4H₂O was prepared, which was added to the extract in a volume ratio of 1:3 (0.1 M FeCl₂·4H₂O:olive leaves extract), while continuously stirring the contents of the reaction beakers on a magnetic stirrer (at 600 rpm). 0.75 M NaOH was added to the obtained solution to raise the pH to a level between 5.0 and 6.5 (the pH was measured with an indicator paper) until a precipitate was obtained. Then, 0.01% (w/v) of α-lipoic acid was added to the suspension. The obtained suspension of active iron particles was lyophilised to obtain a dry preparation which was stored in a sealed glass container.

### Embodiment 6

Plant extract was prepared by suspending 25 g of dried olive leaves in 400 ml of deionised water and shaking at 400 rpm for 1.5 h at 80°C. The extract obtained was then filtered under pressure on a Buchner funnel using a soft filter paper. In a separate vessel, a fresh solution of 0.1 M FeCl₃·6H₂O was prepared, which was added to the extract in a volume ratio of 1:3 (solution of 0.1 M FeCl₃·6H₂O:olive leaves extract), while continuously stirring the contents of the reaction beakers on a magnetic stirrer (at 600 rpm). 0.75 M NaOH was added to the obtained solution to raise the pH to a level between 5.0 and 6.5 (the pH was measured with an indicator paper) until a precipitate was obtained. Then, 0.01% (w/v) of α-lipoic acid was added to the suspension. The obtained suspension of active iron particles was lyophilised to obtain a dry preparation which was stored in a sealed glass container.

### Embodiment 7

Plant extract was prepared by suspending 25 g of dried plant consisting of a mixture of oregano leaves, yerba mate and olive leaves in a ratio of 2:2:1 by weight, respectively, in 400 ml of deionised water and shaking at 400 rpm for 1.5 h at 80°C. The extract obtained was then filtered under pressure on a Buchner funnel using a soft filter paper. In a separate vessel, a fresh solution of 0.1 M FeCl₂·4H₂O was prepared, which was added to the extract in a volume ratio of 1:3 (0.1 M FeCl₂·4H₂O:plant extract), while continuously stirring the contents of the reaction beakers on a magnetic stirrer (at 600 rpm). 0.75 M NaOH was added to the obtained solution to raise the pH to a level between 5.0 and 6.5 (the pH was measured with an indicator paper) until a precipitate was obtained. Then, 0.01% (w/v) of α-lipoic acid was added to the suspension. The obtained suspension of active iron particles was lyophilised to obtain a dry preparation which was stored in a sealed glass container.

### Embodiment 8

Plant extract was prepared by suspending 25 g of dried plant consisting of a mixture of oregano leaves, yerba mate and olive leaves in a ratio of 2:2:1 by weight, respectively, in 400 ml of deionised water and shaking at 400 rpm for 1.5 h at 80°C. The extract obtained was then filtered under pressure on a Buchner funnel using a soft filter paper. In a separate vessel, a fresh solution of 0.1 M FeCl₃·6H₂O was prepared, which was added to the extract in a volume ratio of 1:3 ( solution of 0.1 M FeCl₃·6H₂O:plant extract), while continuously stirring the contents of the reaction beakers on a magnetic stirrer (at 600 rpm). 0.75 M NaOH was added to the obtained solution to raise the pH to a level between 5.0 and 6.5 (the pH was measured with an indicator paper) until a precipitate was obtained. Then, 0.01% (w/v) of α-lipoic acid was added to the suspension. The obtained suspension of active iron particles was lyophilised to obtain a dry preparation which was stored in a sealed glass container.

### Embodiment 9

Antimicrobial activity of the preparations was evaluated according to a procedure described below and the results are shown in Table 1.
The antimicrobial activity of the obtained preparations was determined using a well-diffusion method. For this purpose, 1 ml of a suspension of micro-organisms with a density of 1.5×10⁷ cells /1 ml was inoculated into petri dishes and a medium suitable for culturing the micro-organisms in question was poured over (MRS in case of inoculating *Lactobacillus* sp. bacilli, nutrient agar in case of inoculating *Salmonella* sp., *Escherichia coli* and *Listeria* sp.). After thorough mixing and solidification of the medium, wells were cut in centres of the plates and each of them was filled with 100 µl of a suspension containing a 3% solution of active iron particles in 0.9% NaCl (w/v). After 24 h of plate incubation at 37°C (+/-2°C), zones of microbial inhibition around the wells were measured.

**Table 1. Evaluation of antimicrobial activity of iron preparations obtained with use of plant extracts.**

| Type of iron preparation | *Lactobacillus* sp. | *Salmonella* sp. | *Escherichia coli* | *Listeria* sp. |
|---|---|---|---|---|
| | Inhibition of microbial growth | | | |
| Oregano /FeCl₂ | - | + | + | - |
| Oregano /FeCl₃ | - | - | + | + |
| Yerba mate/ FeCl₂ | - | + | + | + |
| Yerba mate/ FeCl₃ | - | - | + | + |
| Green tea/ FeCl₂ | - | - | + | - |
| Green tea/ FeCl₃ | - | - | + | - |
| Mixture of plant extracts/FeCl₂ | - | + | + | + |
| Mixture of plant extracts/FeCl₃ | - | - | + | + |

| | | | | |
|---|---|---|---|---|
| "-" - no inhibition of growth was observed "+" - inhibition of growth was observed | | | | |

A selective inhibitory effect on microbial growth was observed for all of the preparations tested. In case of yerba mate/FeCl₂ extracts and the mixture of plant extracts/FeCl₂, inhibition of growth was observed for all of the pathogenic microorganisms tested. At the same time, none of the preparations tested showed any inhibitory effect on the growth of *Lactobacillus sp.*

### Literature

Anesini, C., Ferraro, G.E., Filip, R., 2008. Total polyphenol content and antioxidant capacity of commercially available tea (Camellia sinensis) in Argentina. J. Agric. Food Chem. 56, 9225-9229.
Crane, R.A., Scott, T.B., 2012. Nanoscale zero-valent iron: future prospects for an emerging water treatment technology. J. Hazard. Mater. 211-212, 112-125.
Eglal M.M., Ramamurthy A.S. (2014). Nanofer ZVI: Morphology, Particle Characteristics, Kinetics, and Applications, Journal of Nanomaterials, Volume 2014, 11 pages, http://dx.doi.org/10.1155/2014/152824
Garcia F.E., Senn A.M., Meichtry J.M., Scott T.B., Pullin H., Leyva A.G., ... Litter M.I. (2019). Iron-based nanoparticles prepared from yerba mate extract. Synthesis, characterization and use on chromium removal. Journal of Environmental Management, 235, 1-8. doi:10.1016/j.jenvman.2019.01.002
Genuino, H.C., Luo, Z., Mazrui, N., Seraji, M.I., Hoag, G.E., 2013. Green Synthesized Iron Nanomaterials for Oxidative Catalysis of Organic Environmental Pollutants. New and Future Developments in Catalysis. First edition Catalysis for Remediation and Environmental Concerns. Elsevier, pp. 41-61
Herlekar, M., Barve, S., Kumar, R., 2014. Plant-mediated green synthesis of iron nanoparticles. J. Nanopart. 2014, 9 Article ID 140614.
Hoag, G.E., Collins, J.B., Holcomb, J.L., Hoag, J.R., Nadagouda, M.N., Varma, R.S., 2009. Degradation of bromothymol blue by 'greener' nano-scale zero-valent iron synthesized using tea polyphenols. J. Mater. Chem. 19, 8671-8677.
Kharissova, O.V., Dias, H.V., Kharisov, B.I., Perez, B.O., Perez, V.M., 2013. The greener synthesis of nanoparticles. Trends Biotechnol. 31, 240-248.
Litter, M.I., Quici, N., Meichtry, J.M. (Eds.), 2018. Iron Nanomaterials for Water and Soil Treatment. Pan Stanford Publishers, New York.
Naseem T., Farrukh M.A. 2015. Antibacterial Activity of Green Synthesis of Iron Nanoparticles Using Lawsonia inermis and Gardenia jasminoides Leaves Extract, Hindawi Publishing Corporation Journal of Chemistry, Vol. 2015, 7 pages, http://dx.doi.org/10.1155/2015/912342
Oakes, J.S., 2013. Investigation of Iron Reduction by Green Tea Polyphenols for Application in Soil Remediation. University of Connecticut Graduate School, Storrs, Connecticut, USA
Saif S., Tahir A., Chen Y. (2016). Green Synthesis of Iron Nanoparticles and Their Environmental Applications and Implications. Nanomaterials (Basel, Switzerland), 6(11), 209. doi:10.3390/nano6110209
Wang, C.B., Zhang, W.X., 1997. Synthesizing nanoscale iron particles for rapid and complete dechlorination of TCE and PCBs. Environ. Sci. Technol. 31, 2154-2156.
Yuvakkumar R., Elango V., Rajendran V., Kannan N. 2011. Preparation and Characterization Of Zero Valent Iron Nanoparticles, Digest Journal of Nanomaterials and Biostructures.6 (4), 1771-1776

## Claims

1. A method of preparation of an antimicrobial preparation based on iron and a plant extract, **characterised in that** a dried plant is mixed with water or an aqueous solution, wherein weight ratio of dried plant:water equals from 1:5 to 1:30, preferably from 1:10 to 1: 20, after which the mixture is shaken at a temperature between 20 °C and 100 °C, preferably between 40 °C and 100 °C, more preferably between 60 °C and 90 °C for at least 10 min., preferably for at least 30 min., most preferably for at least 1 h, to obtain an aqueous extract of the dried plant, the obtained aqueous extract of the dried plant is then separated from solid residue of the dried plant and a solution of Fe(II) or Fe(III) iron salts or a mixture of Fe(II) and Fe(III) iron salts in a concentration between 0,01 and 2 M, preferably between 0,05 and 1 M, is added to the aqueous extract of dried plant with stirring, wherein the volume ratio of salt solution : aqueous extract of dried plant is between 1:1 and 1:10, preferably between 1:2 and 1:5, the pH is then adjusted to between 5.0 and 6.5 until precipitation of a precipitate containing active iron particles is achieved, after which the obtained suspension of the active iron particles is stabilised by the addition of 0.001-5%, preferably 0.005-0.5% (w/v) α-lipoic acid relative to the volume of the suspension.

2. The method according to claim 1, **characterised in that** the suspension, once stabilised, is dried to obtain a precipitate containing active iron particles.

3. The method according to claim 2, **characterised in that** the suspension, once stabilised, is dried by lyophilisation.

4. The method according to claim 1 or 2 or 3, **characterised in that** the dried plant contains oregano leaves and/or yerba mate, and/or olive leaves.

5. The method according to claim 4, **characterised in that** the dried plant contains oregano leaves and yerba mate and olive leaves in a weight ratio of 2:2:1, respectively.

6. The method according to any of claims 1 to 5, **characterised in that** the dried plant is mixed with water in a dried plant:water ratio of 1:16 by weight.

7. The method according to any of claims 1 to 6, **characterised in that** the mixture of dried plant and water is shaken for 1,5 h at 80°C.

8. The method according to any of claims 1 to 7, **characterised in that** to the aqueous extract of dried plant, 0,033 mole of FeCl₃·6H₂O and/or FeCl₂·4H₂O per dm³ of extract is added.

9. The method according to any of claims 1 to 8, **characterised in that** a 0.01% (w/v) addition of α-lipoic acid relative to the volume of the suspension is used to stabilise the suspension.

10. An antimicrobial preparation based on iron and a plant extract obtained by the method as defined in any of claims 1 to 9.

11. Use of the antimicrobial preparation based on iron and a plant extract as defined in claim 10 for inhibiting pathogenic and undesirable microflora.

12. The use according to claim 11 for inhibiting growth of *Salmonella* sp. and/or *Escherichia coli,* and/or *Listeria* sp.
